# EUROPÄISCHE PATENTSCHRIFT

(11) **EP 1 924 373 B1**
(45) Veröffentlichungstag und Bekanntmachung des Hinweises auf die Patenterteilung: **07.04.2010**
(21) Anmeldenummer: 06791974.6
(22) Anmeldetag: 11.09.2006
(51) Int. Cl.: B22D 19/14, B22D 19/00, B22C 9/10, F16J 10/04, F02F 1/10, B22D 17/00, B22D 18/00

(54) **ZYLINDERKURBELGEHÄUSE FÜR KRAFTFAHRZEUGE**
CYLINDER CRANKCASE FOR MOTOR VEHICLES
CARTER DE VILEBREQUIN DESTINE A DES VEHICULES

(30) Priorität: 09.09.2005 DE 102005043193
(43) Veröffentlichungstag der Anmeldung: 28.05.2008
(73) Patentinhaber: KS Aluminium-Technologie GmbH, 74172 Neckarsulm (DE)
(72) Erfinder: KÖHLER, Eduard, 74078 Heilbronn (DE); NIEHUES, Jürgen, 74831 Gundelsheim (DE); SOMMER, Bernd, 74613 Öhringen (DE); SCHUSTER, Heinz, 74229 Oedheim (DE); SCHNABEL, Dieter-Horst, 74254 Offenau (DE); MÖDING, Herbert, 74177 Bad Friedrichshall (DE); HAUSBERGER, Manfred, 74354 Besigheim (DE); ZIEGLER, Steffen, 74193 Schwaigern (DE); BEER, Stephan, 74251 Lehrensteinsfeld (DE)
(74) Vertreter: Patentanwälte ter Smitten
(86) Internationale Anmeldenummer: PCT/EP2006/008826
(87) Internationale Veröffentlichungsnummer: WO 2007/028650

(56) Entgegenhaltungen:
- EP-A- 0 739 668
- EP-A1- 0 788 855
- DE-A1- 4 009 714
- DE-A1- 19 750 687
- DE-A1-102004 006 600
- US-A- 4 446 906
- US-A- 5 845 698
- KAINER K U: "Metallische Verbundwerkstoffe" 2003, WILEY-VCH VERLAG , WEINHEIM , XP002412964 Seiten 109-123

## Beschreibung

Die Erfindung betrifft ein Zylinderkurbelgehäuse für ein Kraftfahrzeug aus einer Leichtmetalllegierung.

Ein Bestreben der Hersteller von Zylinderkurbelgehäusen für die Automobilindustrie liegt seit langem darin, Zylinderkurbelgehäuse herzustellen, die in einer Closed-deck-Ausführung vorliegen und mittels eines druckbeaufschlagbaren Gießverfahrens hergestellt sind. Ein Zylinderkurbelgehäuse in Closed-deck-Ausführung zeichnet sich dadurch aus, dass die die Zylinder umgebenden Kühlmäntel zumindest bereichsweise verschlossen sind. Das Verschließen dieser Kühlkanäle führt dazu, dass die die Hohlräume während des Gießens bildenden Formkörper mit Hinterschnitten versehen sind. Es ist bekannt derartige Zylinderkurbelgehäuse mittels aus Sand gepressten Formkernen herzustellen. Formkerne aus Sand oder auch Salz sind aber nicht druckbeständig, so dass sie im Druckgieß- oder Squeeze-Casting-Verfahren nicht einsetzbar sind.

Aus der DE 10 2004 006 600 A1 ist ein für Druckgießverfahren einsetzbarer Salzkern für die Erzeugung eines Formhohlraums in einem durch ein Gießverfahren geformten Gegenstand bekannt.

Neben der Anforderung zur Herstellung der Closed-deck-Zylinderkurbelgehäuse besteht eine weitere Anforderung in der Motorenentwicklung der Automobilindustrie darin, Zylinderkurbelgehäuse zu schaffen, die in den tribologisch beanspruchten Bereichen den Anforderungen genügt, wobei insbesondere die Zylinderbuchsen zu nennen sind. Hierzu ist beispielhaft die DE 40 09 714 A1 zu nennen, in der ein Einzelzylinder- oder Mehrzylinderblock beschrieben ist, der lokal mit höheren Festigkeiten versehen ist. Hierzu wird ein Verfahren beschrieben, bei dem ein auf eine Temperatur von 400 bis 600° C erwärmter Faserformkörper auf eine Pinole einer Gießform aufgesetzt und die Aluminiumlegierungsschmelze mit einer Temperatur von 600 bis 800° C in die Gießform eingefühlt und unter Druck zur Erstarrung gebracht wird. Hierdurch penetriert der Aluminiumwerkstoff in den hohlzylinderförmigen Formkörper aus keramischen Fasern mit darin eingefügten Siliziumkörnern, was zu einem lokalen Auflegieren des Grundwerkstoffes führt, wodurch letztlich eine lokale Festigkeitssteigerung im Zylindergehäuse erzielt wird.

Ein weiteres bekanntes Verfahren zur Erzielung höherer Festigkeiten in mechanisch hoch beanspruchten Bereichen des Zylinderkurbelgehäuses ist das Eingießen von eine höhere Festigkeit aufweisenden Eingussteilen, die bevorzugt aus höher festen Werkstoffen hergestellt sind. Beispielhaft ist hier die DE 197 50 687 A1 zu nennen, die ein Verfahren zum Eingießen von Eingussteilen, insbesondere von Zylinderlaufbüchsen, Lagerbrücken, Gewindeverstärkungen in Leichtmetalllegierungen aufzeigt. In dem hierin beschriebenen Verfahren werden die Eingussteile mit einer Oberflächenstrukturierung versehen, um beim Eingießen eine Verklammerung des Eingussteils im Umguß zu erreichen.

Aus der US 4,446,906 ist ein Zylinderkurbelgehäuse in closed-deck Bauweise bekannt, bei dem ein Eingussteil aus einer Eisenlegierung zur Bildung der Zylinderlaufbuchsen verwendet wird. Diese werden im Gießprozess durch ein Aluminiumdrahtgeflecht in ihrer Position gehalten.

Des Weiteren ist aus der DE 102 60 487 A1 ein Verfahren zur Festigkeitserhöhung des Lagerstuhls bekannt, bei dem eine offenporige Preform aus Keramik, Partikeln oder Fasern in Hybridform in die Form beim Gießen eingelegt wird, um den Wärmeausdehnungskoeffizienten im Lagerstuhlbereich zu beeinflussen.

Aufgabe der Erfindung ist es, ein Zylinderkurbelgehäuse zu entwickeln, das zumindest bereichsweise mit Hinterschnitten versehen ist und das darüber hinaus lokal, gegenüber dem Grundwerkstoff höhere Festigkeiten aufweist. Darüber hinaus soll das Zylinderkurbelgehäuse kostengünstig herzustellen und leicht in vorhandenen Gießmaschinen herstellbar sein.

Die erfindungsgemäße Aufgabe wird dadurch gelöst, dass das Zylinderkurbelgehäuse zumindest bereichsweise Hinterschnitte aufweist, dass in das Zylinderkurbelgehäuse mindestens ein, aus einem gegenüber der Leichtmetall-Legierung eine erhöhte Festigkeit aufweisenden Werkstoff gebildetes Eingussteil eingegossen ist, dass das Zylinderkurbelgehäuse als Closed-Deck-Zylinderkurbelgehäuse ausgebildet ist und mittels eines druckbeaufschlagten Gießverfahrens, insbesondere mittels Druckgießens oder Squeeze-Castings, hergestellt ist, wobei mittels infiltrierbarer Preformen die Zylinderlaufflächen lokal mit Silizium legiert sind und mittels infiltrierbarer Preformen die Lagerstühle gefestigt sind. Somit erfolgt eine Einstellung der Anforderungen an die tribologisch beanspruchten Bereiche des Zylinderkurbelgehäuses durch ein lokales Legieren des Grundwerkstoffes und die mechanisch höher beanspruchten Bereiche des Zylinderkurbelgehäuses weisen eine gegenüber dem Grundwerkstoff erhöhte Festigkeit auf, wobei die Festigkeitssteigerung durch ein Eingießen von Eingussteilen erfolgt. Durch den erfindungsgemäßen Gedanken ist nun die Möglichkeit geschaffen, mittels eines druckbeaufschlagten Gießverfahrens hergestellte Zylinderkurbelgehäuse lokal mit höheren Festigkeiten zu versehen. Hierbei werden die mittels eines druckfesten Kerns hergestellten Zylinderkurbelgehäuse während des Gießens zum Beispiel mit lokal platzierbaren vom Umguß infiltrierbaren Preformen versehen, so dass die hergestellten Zylinderkurbelgehäuse mit lokal höheren Festigkeiten ausgeführt sind. Hierbei wird ausdrücklich darauf hingewiesen, dass der erfindungsgemäße Gedanke sich nicht alleine auf das als Lokasil bekannte Verfahren, bei dem der Grundwerkstoff lokal mit Silicium angereichert wird, beschränkt, es handelt sich vielmehr erfindungsgemäß darum, ein Zylinderkurbelgehäuse zu entwickeln, das einerseits mittels eines druckbeaufschlagbaren Verfahrens hergestellt und das an den tribologisch höher beanspruchten Bereichen eine Festigkeitssteigerung erfahren hat. Beispielhaft sind in dieser Anmeldung Infiltrationskörper sowie Eingussteile genannt.

Bevorzugt werden Zylinderkurbelgehäuse hergestellt, die aus einer Aluminiumlegierung gefertigt sind. Hierbei werden druckbeaufschlagte Gießverfahren eingesetzt, die einerseits als Druckgießverfahren bezeichnet werden, die aber auch kombinierte Verfahren, wie das Squeeze-Casting-Verfahren sind.

Zur Herstellung eines erfindungsgemäßen Zylinderkurbelgehäuses werden vorgefertigte Formlinge als Einzelkomponente oder zusammenhängend, die die spätere Lauffläche sowie Lagerstühle darstellen, umgossen oder falls als Preformen vorliegend mit dem Umguß infiltriert. Die als Wassermantelgeometrie darzustellenden Hohlräume werden hierbei über druckfeste Kerne dargestellt.

## Patentansprüche

1. Zylinderkurbelgehäuse für ein Kraftfahrzeug aus einer Leichtmetall-Legierung, insbesondere einer Aluminiumlegierung,
- das zumindest bereichsweise Hinterschnitte aufweist,
- in das mindestens ein, aus einem gegenüber der Leichtmetall-Legierung eine erhöhte Festigkeit aufweisenden Werkstoff gebildetes Eingussteil eingegossen ist,
- das als Closed-Deck-Zylinderkurbelgehäuse ausgebildet ist und
- das mittels eines druckbeaufschlagten Gießverfahrens, insbesondere mittels Druckgießens oder Squeeze-Castings, hergestellt ist
- wobei mittels infiltrierbarer Preformen die Zylinderlaufflächen lokal mit Silizium legiert sind und
- wobei mittels infiltrierbarer Preformen die Lagerstühle gefestigt sind.

2. Zylinderkurbelgehäuse nach Anspruch 1, **dadurch gekennzeichnet, dass** das Eingussteil eine Oberflächenstrukturierung aufweist, so dass eine Verklammerung mit der Leichtmetall-Legierung erreichbar ist.

3. Zylinderkurbelgehäuse nach einem der Ansprüche 1 und 2, **dadurch gekennzeichnet, dass** ein zusätzliches Eingussteil eine Gewindeverstärkung ist.

## Claims

1. Cylinder crankcase for a motor vehicle, made of a light metal alloy, in particular an aluminum alloy,
- which comprises undercuts at least in portions thereof,
- into which at least one cast-in insert is casted that is made from a material having a greater strength than the light metal alloy,
- which is designed as a closed deck cylinder crankcase, and
- which is made by means of a pressurized casting method, in particular by means of die-casting or squeeze casting,
- wherein, by means of infiltratable preforms, the running surfaces of the cylinder are locally alloyed with silicon, and
- wherein the bearing seats are strengthened by means of infiltratable preforms.

2. Cylinder crankcase as of claim 1, **characterized in that** the cast-in insert has a surface texture such that an interlocking with the light metal alloy can be obtained.

3. Cylinder crankcase as of one of claims 1 and 2, **characterized in that** an additional cast-in insert is a thread reinforcement.

## Revendications

1. Carter de vilebrequin destiné à des véhicules motorisés, formé d'un alliage de métal léger, notamment un alliage d'aluminium,
- comprenant des contre-dépouilles au moins dans des parties,
- dans lequel est coulé au moins un insert encastré formé d'un matériau présentant une résistance mécanique élevée par rapport à l'alliage de métal léger,
- qui est configuré comme un carter de vilebrequin fermé, et
- qui est produit par un procédé de moulage utilisant de la pression, notamment par moulage sous pression ou moulage par compression,
- les glaces du cylindre étant localement alliées avec du silicium au moyen de préformes infiltrables, et
- les selles d'appui étant renforcées au moyen de préformes infiltrables.

2. Carter de vilebrequin selon la revendication 1, **caractérisé en ce que** ledit insert encastré a une structure de surface de sorte que l'on peut obtenir une adhésion mécanique avec ledit alliage de métal léger.

3. Carter de vilebrequin selon la revendication 1 et 2, **caractérisé en ce qu'**un insert encastré additionnel est un renforcement d'un filetage.
